# EUROPEAN PATENT SPECIFICATION

(11) **EP 3 851 698 B1**
(45) Date of publication and mention of the grant of the patent: **24.01.2024**
(21) Application number: 19860724.4
(22) Date of filing: 10.09.2019
(51) Int. Cl.: F16D 65/06, B61H 1/00

(54) **RAILWAY BRAKE SHOE**
EISENBAHNBREMSSCHUH
SABOT DE FREIN DE CHEMIN DE FER

(30) Priority: 11.09.2018 JP 2018169931
(43) Date of publication of application: 21.07.2021
(73) Proprietor: Akebono Brake Industry Co., Ltd., Tokyo 103-8534 (JP)
(72) Inventor: SHINDO, Takayuki, Tokyo 103-8534 (JP); KADOTANI, Eiji, Tokyo 103-8534 (JP); HARIGAI, Yoshikazu, Tokyo 103-8534 (JP); ASAKAWA, Naoki, Tokyo 103-8534 (JP)
(74) Representative: Grünecker Patent- und Rechtsanwälte PartG mbB
(86) International application number: PCT/JP2019/035592
(87) International publication number: WO 2020/054736

(56) References cited:
- JP-A- S52 112 071
- JP-A- 2012 041 994
- JP-U- H 058 068
- JP-U- S59 152 227
- JP-U- S59 152 228
- JP-Y2- 2 556 857

## Description

### TECHNICAL FIELD

The present invention relates to a railway brake shoe.

### BACKGROUND ART

A brake shoe apparatus of a railway vehicle mainly includes a brake shoe head attached to a vehicle side and a brake shoe assembled to the brake shoe head. As disclosed in Patent Literature 1, the brake shoe basically includes a base plate formed in an arc shape, a lining which is a friction member attached to a main surface on a wheel side of the base plate, and an attachment portion. Further, an anti-vibration portion is attached to the base plate. The anti-vibration portion is loosely fitted in a groove of the brake shoe head to suppress vibration in a width direction intersecting a braking force applying direction on the base plate. For example, in Japan, the anti-vibration portion is mainly fixed by welding. For example, overseas, the anti-vibration portion is mainly fixed by molding using a friction material mold in addition to a drawing process and a bending process on the base plate. Further relevant prior art is described in JP S52 112071 A and JP H05 8068 U2.

### CITATION LIST

### PATENT LITERATURE

Patent Literature 1: JP-A-2012-41994

### SUMMARY OF INVENTION

### TECHNICAL PROBLEM

However, fixing by welding or molding using a friction material mold requires knowledge and experience, such as consideration for distortion of components due to heat or a large load. In some cases, large-scale (special) equipment is also required.

The present invention has been made in view of the above circumstances. An object of the present invention is to provide a railway brake shoe capable of fixing an anti-vibration portion to a base plate without causing distortion due to heat or a large load.

### SOLUTION TO PROBLEM

The object of the present invention is achieved with the following configuration. In particular, it is provided a railway brake shoe having the features defined in appended independent claim 1. Further preferred embodiments are defined in the dependent claims.
(1) A railway brake shoe including: a base plate in which a lining is molded on a surface facing a wheel; an attachment portion joined to an opposite side surface opposite to a lining molded surface of the base plate; and an anti-vibration portion that is loosely fitted in a groove of a brake shoe head and that is attached to the base plate so as to suppress a vibration in the base plate in a width direction intersecting a braking force applying direction, in which the anti-vibration portion includes: an engagement protrusion portion that is inserted into a through hole formed in the base plate from a side of the lining molded surface and that has a distal end protruding from the opposite side surface; and a fixed base portion that abuts against the lining molding surface to be inserted and positioned, and is that crimped to an inner wall surface of the through hole.

According to the railway brake shoe having a configuration in (1), the anti-vibration portion includes the fixed base portion on a base end side of the engagement protrusion portion protruding from the opposite side surface. In the anti-vibration portion, the engagement protrusion portion is inserted into the through hole formed in the base plate from the lining molded surface side. The fixed base portion abuts against the lining molded surface, so that further insertion of the anti-vibration portion whose the engagement protrusion portion is inserted, is suppressed. The fixed base portion abuts against the lining molded surface to suppress the engagement protrusion portion from coming out from the opposite side surface opposite to the lining molded surface. Accordingly, the fixed base portion abuts against the lining molded surface, so that the anti-vibration portion is positioned in an insertion direction. On the other hand, the anti-vibration portion is positioned, and at the same time, the fixed base portion is crimped to the inner wall surface of the through hole. The fixed base portion is crimped, so that plastically deformed part of the fixed base portion is fixed to the inner wall surface of the through hole. The anti-vibration portion, in which the fixed base portion is crimped to the through hole, is also suppressed from coming off from the lining molded surface side. Therefore, the anti-vibration portion is positioned with respect to the base plate and is retained (fixed) in any of front and rear of the insertion direction. The crimping process may be performed by applying a load that plastically deforms the small plate piece-shaped engagement protrusion portion inserted into the relatively small through hole. Therefore, the base plate and the anti-vibration portion are suppressed from being distorted due to heat and a large load accompanying the fixing.

(2) The railway brake shoe according to (1), in which the fixed base portion is expanded and crimped with respect to the through hole in the braking force applying direction of the base plate.

According to the railway brake shoe having a configuration in (2), the fixed base portion is expanded and crimped in the braking force applying direction of the through hole. The fixed base portion is formed in a shape of a small piece substantially the same as the engagement protrusion portion. Both ends of the fixed base portion inserted into the through hole in the braking force applying direction are the side end surfaces in the width direction intersecting the braking force applying direction. The side end surfaces of the fixed base portion are crimped to the inner wall surfaces of the through hole. The side end surfaces of the fixed base portion are fixed to the inner wall surfaces without any gap. Accordingly, the anti-vibration portion transmits stress to the brake shoe head without rattling even by repeated impacts during braking, and a vibration is less likely to occur.

(3) The railway brake shoe according to (1) or (2), in which the anti-vibration portion includes: a pair of the engagement protrusion portions; a connecting portion configured to connect between the fixed base portions in the pair of engagement protrusion portions; and a crimping opening extending along a connecting direction of the connecting portion, and in which the fixing base is crimped by expanding the connecting portion in the braking force applying direction of the base plate.

According to the railway brake shoe having a configuration in (3), the pair of engagement protrusion portions arranged in the width direction intersecting the braking force applying direction are connected by the pair of connecting portions separated in the braking force applying direction. That is, the anti-vibration portion is formed by integrally forming the pair of engagement protrusion portions and the pair of connecting portions. In the anti-vibration portion, when the pair of connecting portions is expanded in the braking force applying direction, the fixed base portions are also plastically deformed in the braking force applying direction. In the fixed base portions expanded in the braking force applying direction, the side end surfaces on both sides in the braking force applying direction are fixed to the inner wall surfaces of the through holes. According to the anti-vibration portion, the pair of engagement protrusion portions can be positioned and fixed to the pair of through holes at the same time.

(4) The railway brake shoe according to (3), in which, in the anti-vibration portion, the elongated crimping opening is formed, both end portions in a long side direction are formed of a steel plate bent at substantially a right angle, and the both end portions in the long side direction constitute the pair of engagement protrusion portions.

According to the railway brake shoe having a configuration in (4), the elongated crimping opening is formed between the pair of connecting portions. In the crimping opening, the arc portions at both ends in the long side direction reach the pair of fixed base portions. The pair of engagement protrusion portions of the anti-vibration portion is inserted into the pair of through holes at the same time. The pair of connecting portions of the anti-vibration portion whose engagement protrusion portions are inserted into the through holes abuts against the lining molded surface. In this state, the crimping opening is expanded in the direction (that is, the braking force applying direction) in which the pair of connecting portions is separated from each other, so that the anti-vibration portion is crimped. The arc portion of the crimping opening is formed in each fixed base portion. The fixed base portion includes a pair of leg portions on both sides in the braking force applying direction with the arc portion interposed therebetween. The arc portion is formed in the fixed base portion, so that the pair of leg portions is easily plastically deformed. As a result, the fixed base portions are fixed to the inner wall surfaces of the crimping opening with a higher holding force as compared with a case in which the arc portions are not formed.

(5) The railway brake shoe according to (4), in which the pair of engagement protrusion portions has gaps between the inner wall surfaces of the through holes and bent inside corner portions.

According to the railway brake shoe having a configuration in (5), the pair of engagement protrusion portions is inserted into the pair of through holes separated in the width direction of the base plate. The pair of engagement protrusion portions is bent perpendicularly at both ends of the connecting portion. The boundary between each engagement protrusion portion and the connecting portion is the inside corner portion bent at a right angle. In the anti-vibration portion, the gaps are secured between the inside corner portions and the inner wall surfaces. The minute R portion due to a bending process is present at the inside corner portion. By providing the R portion in the gap in the anti-vibration portion, interference between an edge of the through hole and the R portion can be avoided, and the connecting portions can be brought into close contact with the lining molded surface. Accordingly, in the railway brake shoe, the anti-vibration portion can be fixed to the base plate with high accuracy and without rattling.

### ADVANTAGEOUS EFFECTS OF INVENTION

According to the railway brake shoe in the present invention, the anti-vibration portion can be fixed to the base plate without causing distortion due to heat or a large load.

The present invention has been briefly described as above. Further, details of the present invention will be clarified by reading a mode (hereinafter, referred to as an "embodiment") for carrying out the invention to be described below with reference to the accompanying drawings.

### BRIEF DESCRIPTION OF DRAWINGS

[Fig. 1] Fig. 1 is a front view showing a railway brake shoe according to an embodiment of the present invention, and a brake shoe head, a bow, and a wheel that are configured to assemble the railway brake shoe.
[Fig. 2] Fig. 2 is a plan view showing only the brake shoe head in a configuration shown in Fig. 1 with an outline of a two-dot chain line.
[Fig. 3] Fig. 3 is a plan view showing a base portion of the brake shoe head in a configuration shown in Fig. 2 with a cross section along an arc surface.
[Fig. 4] Fig. 4 is a perspective view showing an anti-vibration portion shown in Fig. 1.
[Fig. 5] Fig. 5 is a perspective view showing a base plate to which the anti-vibration portion and an attachment portion that are shown in Fig. 4 are assembled.
[Fig. 6] Fig. 6 is a perspective view showing the anti-vibration portion shown in Fig. 5.
[Fig. 7] (a) of Fig. 7 is a plan view showing a main part of the base plate having engagement protrusion portions of the anti-vibration portion as a cross section, and (b) of Fig. 7 is a cross-sectional view taken along a line A-A in (a) of Fig. 7.
[Fig. 8] (a) of Fig. 8 is an enlarged plan view showing a through hole through which the engagement protrusion portion on a left side shown in Fig. 7 penetrates, and (b) of Fig. 8 is an enlarged plan view showing a through hole through which the engagement protrusion portion on a right side shown in Fig. 7 penetrates.
[Fig. 9] Fig. 9 is an exploded perspective view showing the anti-vibration portion and the base plate before the anti-vibration portion is assembled.
[Fig. 10] Fig. 10 is a perspective view showing the base plate on which the anti-vibration portions are crimped, as viewed from a lining molded surface side.
[Fig. 11] Fig. 11 is a perspective view showing one of four-divided anti-vibration portions according to a modification.
[Fig. 12] Fig. 12 is a perspective view showing one of anti-vibration portions formed in a cylindrical shape according to a modification.

### DESCRIPTION OF EMBODIMENTS

Hereinafter, an embodiment according to the present invention will be described with reference to the drawings.

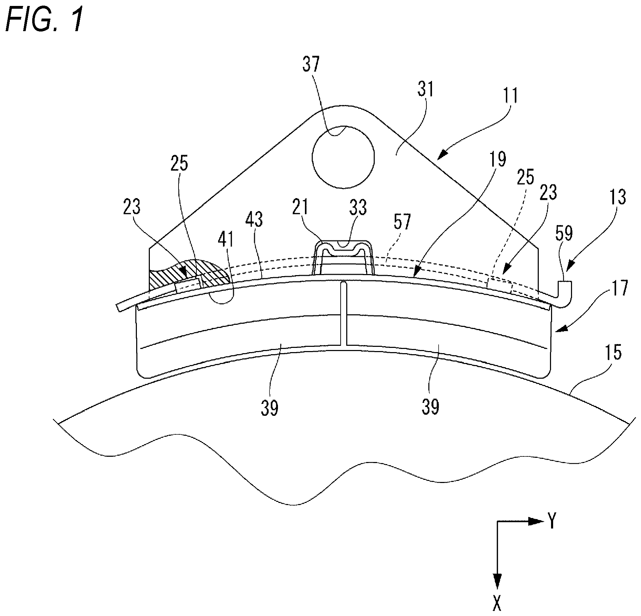

Fig. 1 is a front view showing a railway brake shoe 17 according to the embodiment of the present invention, and a brake shoe head 11, a bow 13, and a wheel 15 that are configured to assemble the railway brake shoe 17.

The railway brake shoe 17 according to the present embodiment is assembled to the brake shoe head 11 attached to a railway vehicle, thereby constituting a brake shoe apparatus. Hereinafter, the railway brake shoe 17 is simply referred to as the "brake shoe 17".

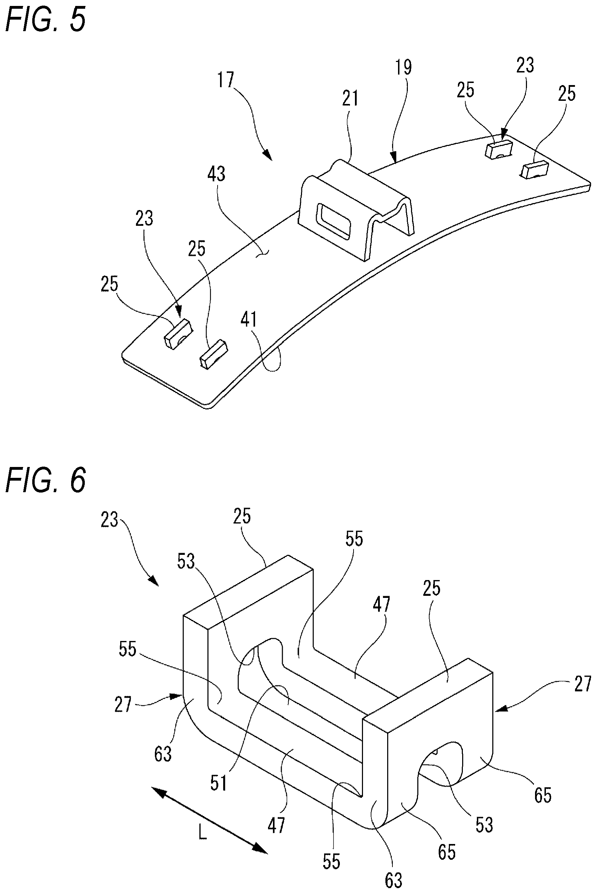

The brake shoe 17 according to the present embodiment includes, as main configurations, a base plate 19, an attachment portion 21, anti-vibration portions 23, engagement protrusion portions 25 of the anti-vibration portions 23, and fixed base portions 27 (see Fig. 6) of the anti-vibration portions 23.

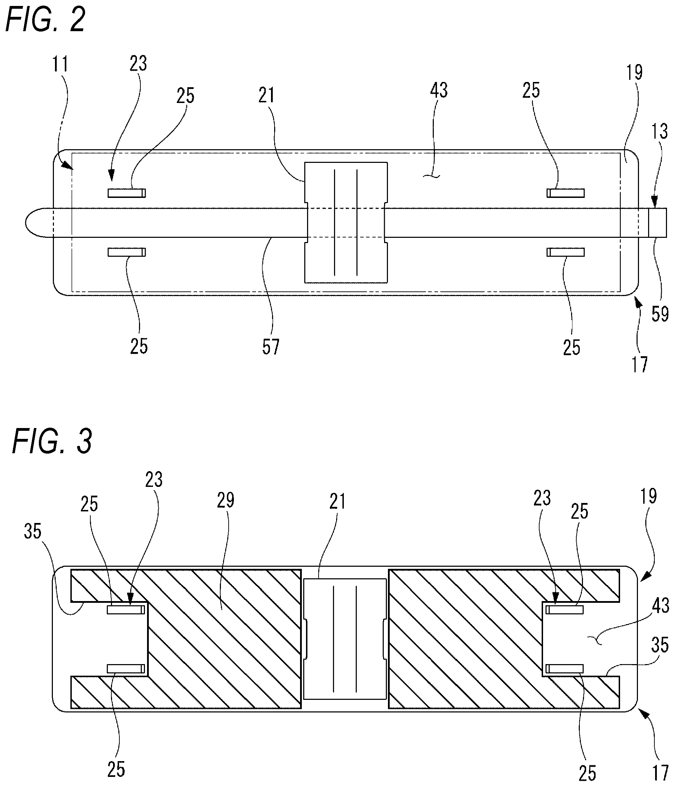

Fig. 2 is a plan view showing only the brake shoe head 11 in a configuration shown in Fig. 1 with an outline of a two-dot chain line.

The brake shoe head 11 serves as a base configured to fix the brake shoe 17 to a railway vehicle (not shown), and the brake shoe 17 is pressed against the wheel 15 via the brake shoe head 11.

Fig. 3 is a plan view showing a base portion 29 of the brake shoe head 11 in a configuration shown in Fig. 2 with a cross section along an arc surface.

The brake shoe head 11 basically includes the base portion 29 and a suspension portion 31. The base portion 29 is a member that faces the wheel 15 of the railway vehicle, and has an arc surface along an arc of the wheel 15. The base portion 29 is formed with a concave 33 for loosely fitting the attachment portion 21 of the brake shoe 17. As shown in Fig. 1, the concave 33 is formed in a substantially U shape, and grooves 35 are formed in a width direction of the brake shoe head 11. A side wall of the concave 33 is formed with a through hole for inserting an engagement pin called the bow 13 (a cotter).

The suspension portion 31 is a brake shoe head fixing portion provided on a surface of the base portion 29 that does not face the wheel 15. The suspension portion 31 is formed with a connecting hole 37 for rotatably connecting the brake shoe head 11 to a brake shoe head suspension (not shown) provided in the railway vehicle.

The brake shoe 17 basically includes the base plate 19, a lining 39, the anti-vibration portions 23, and the attachment portion 21. The base plate 19 is a substantially rectangular flat plate having an arc shape along an arc of the base portion 29 in the above-described brake shoe head 11, that is, an arc of the wheel 15 in the railway vehicle. The attachment portion 21 is attached to a central portion of the base plate 19 in a long side direction. The attachment portion 21 abuts against the side wall of the concave 33 in the brake shoe head 11 and serves as a torque receiving portion configured to receive torque generated during braking.

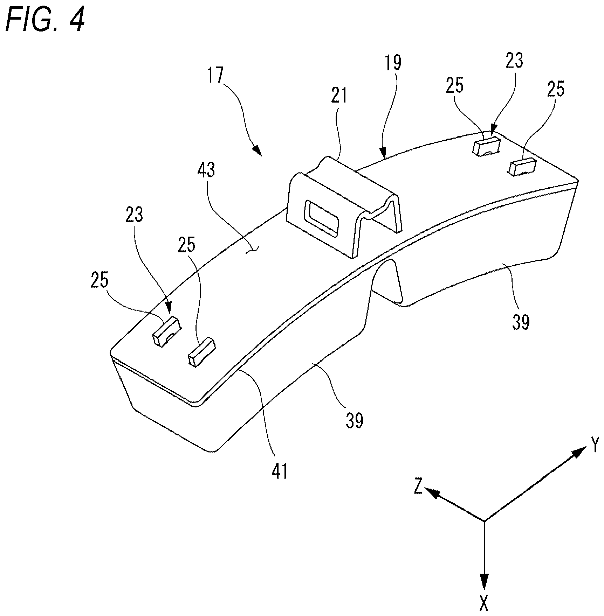

Fig. 4 is a perspective view showing the anti-vibration portions 23 shown in Fig. 1.

The lining 39, which is a friction member, is attached to a surface (a lining molded surface 41) of the base plate 19 facing the wheel 15. The lining 39 is formed by sintering or polymerizing general cast iron, cast iron containing phosphorus, manganese, or the like, a synthetic resin, a metal powder, or the like as base material in a block shape. The anti-vibration portion 23 is provided between the base plate 19 and the lining 39. The anti-vibration portion 23 is a component that supports an axial load received by the brake shoe 17.

Fig. 5 is a perspective view showing the base plate 19 to which the anti-vibration portions 23 and the attachment portion 21 that are shown in Fig. 4 are assembled.

On an opposite side surface 43 of the lining molded surface 41 of the base plate 19, the engagement protrusion portions 25 of the anti-vibration portions 23 and the attachment portion 21 are provided. The anti-vibration portions 23 are provided in a vicinity of both end portions of the base plate 19 in the long side direction. The anti-vibration portions 23 are loosely fitted in the grooves 35 formed in the base portion 29 of the brake shoe head 11, so that the anti-vibration portions 23 can suppress a vibration of the base plate 19 with the attachment portion 21 as a base point in a width direction Z intersecting a braking force applying direction Y In the anti-vibration portion 23, two plates (the engagement protrusion portions 25) protruding from a surface of the base plate 19 serve as stop plates.

Fig. 6 is a perspective view showing the anti-vibration portions 23 shown in Fig. 5.

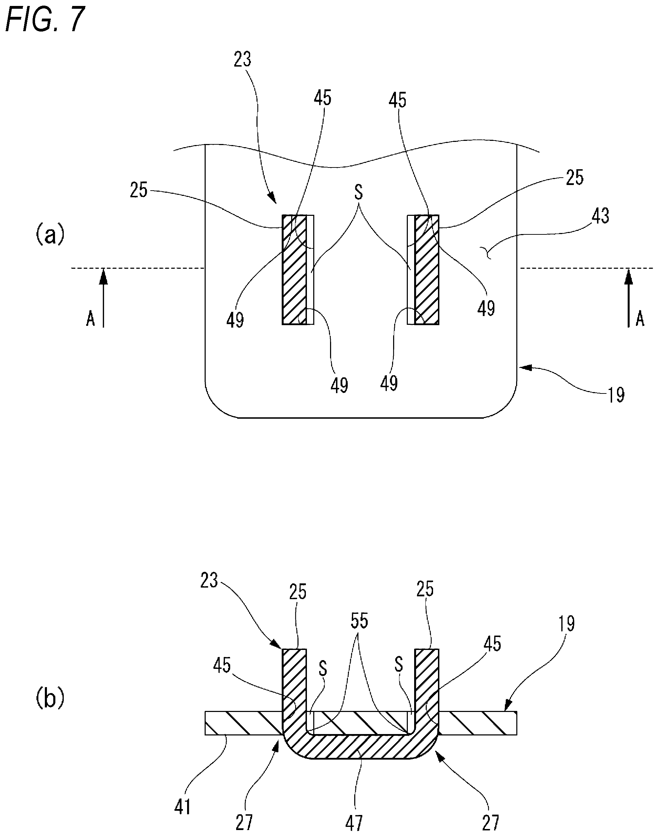

The anti-vibration portion 23 includes the engagement protrusion portions 25. The engagement protrusion portions 25 are inserted into through holes 45 (see Fig. 7) formed in the base plate 19 from a lining molded surface side, and distal ends of the engagement protrusion portions 25 protrude from the opposite side surface 43. In the anti-vibration portion 23, a pair of the engagement protrusion portions 25 arranged in the width direction Z (see Fig. 4) intersecting the braking force applying direction Y are connected by a pair of connecting portions 47 separated in the braking force applying direction Y. That is, the anti-vibration portion 23 is formed by integrally forming the pair of engagement protrusion portions 25 and the pair of connecting portions 47 in a square frame shape in a plan view.

The anti-vibration portion 23 includes the fixed base portions 27. The fixed base portions 27 are inserted and positioned by abutting against the lining molded surface 41, and are crimped to inner wall surfaces 49 of the through holes 45.

The brake shoe 17 is crimped by expanding the fixed base portions 27 with respect to the through holes 45 in the braking force applying direction Y of the base plate 19.

In the brake shoe 17, the anti-vibration portion 23 includes the pair of engagement protrusion portions 25, the connecting portions 47 connecting between the fixed base portions 27 of the pair of engagement protrusion portions 25, and a crimping opening 51 extending along a connecting direction of the connecting portions 47. In the brake shoe 17, the fixed base portions 27 are crimped by expanding the connecting portions 47 in the braking force applying direction Y of the base plate 19.

The anti-vibration portion 23 is formed of a steel plate in which both end portions of the anti-vibration portion 23 in a long side direction L are bent at substantially right angles to the same surface side. Both end portions of the anti-vibration portion 23 bent at substantially right angles constitute the pair of engagement protrusion portions 25. The elongated crimping opening 51 is formed between the pair of connecting portions 47. In the crimping opening 51, arc portions 53 at both ends in the long side direction reach the pair of fixed base portions 27.

(a) of Fig. 7 is a plan view showing a main part of the base plate 19 having the engagement protrusion portions 25 of the anti-vibration portion 23 as a cross section, and (b) of Fig. 7 is a cross-sectional view taken along a line A-A in (a) of Fig. 7.

A boundary between each engagement protrusion portion 25 and the connecting portion 47 is an inside corner portion 55 bent at a right angle. In the anti-vibration portion 23, a minute R portion due to a bending process is present at the inside corner portion 55. The pair of engagement protrusion portions 25 has gaps S between the inner wall surfaces 49 of the through holes 45 and the bent inside corner portions 55.

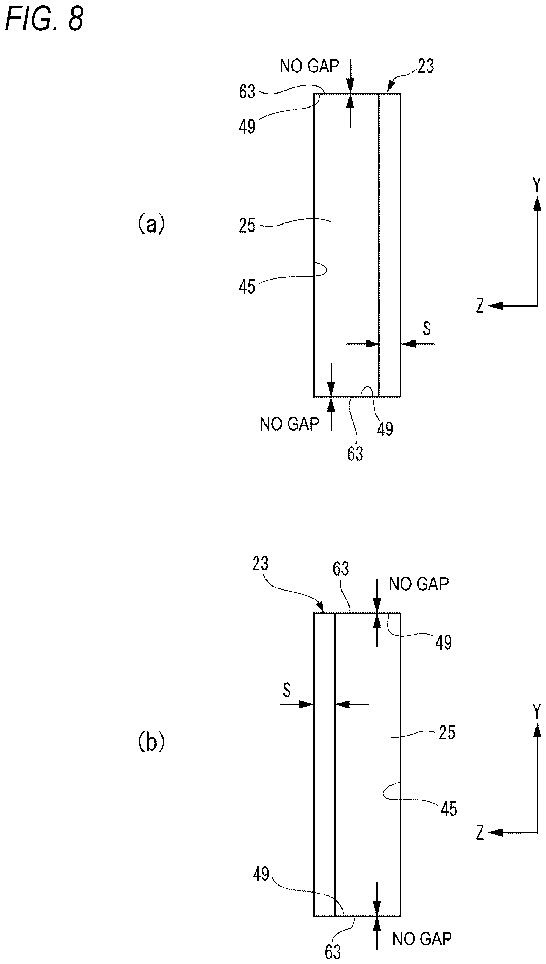

(a) of Fig. 8 is an enlarged plan view showing the through hole 45 through which the engagement protrusion portion 25 on a left side shown in Fig. 7 penetrates, and (b) of Fig. 8 is an enlarged plan view showing the through hole 45 through which the engagement protrusion portion 25 on a right side shown in Fig. 7 penetrates.

The gaps S are formed between the pair of parallel engagement protrusion portions 25 connected by the connecting portions 47 and the through holes 45 on the opposite surface sides of the pair of engagement protrusion portions 25. In the anti-vibration portions 23, the gaps S are secured between the inside corner portions 55 and the inner wall surfaces 49. In the anti-vibration portion 23, the R portion is provided in the gap S.

The bow 13 includes a pin body 57 having an arc shape along the arc of the base portion 29 of the brake shoe head 11, and a retaining portion 59 provided at one end portion of the pin body 57. By engaging the brake shoe head 11 and the brake shoe 17 using the bow 13 having this configuration, the brake shoe 17 is assembled to the brake shoe head 11 with appropriate backlash (looseness).

Next, an assembly procedure of the anti-vibration portion 23 will be described.

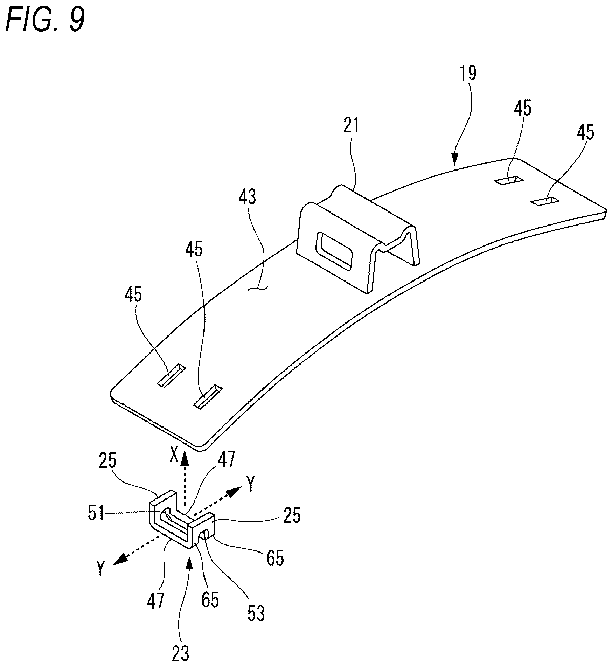

Fig. 9 is an exploded perspective view showing the anti-vibration portion 23 and the base plate 19 before the anti-vibration portion 23 is assembled.

In order to assemble the anti-vibration portion 23 to the base plate 19, a pair of the parallel through holes 45 long in the braking force applying direction Y is drilled in advance at both ends of the base plate 19 in the long side direction. That is, a total of two pairs (four) of the through holes 45 are drilled in the base plate 19 at both ends of the base plate 19 in the long side direction.

Next, a pair of the anti-vibration portions 23 shown in Fig. 6 is prepared. The pair of anti-vibration portions 23 may be attached to either end of the base plate 19. The anti-vibration portion 23 is temporarily assembled by simultaneously inserting the pair of engagement protrusion portions 25 into the pair of through holes 45 from the lining molded surface side of the base plate 19. At this time, the anti-vibration portion 23 is reliably pushed in until the connecting portions 47 hit the lining molded surface 41.

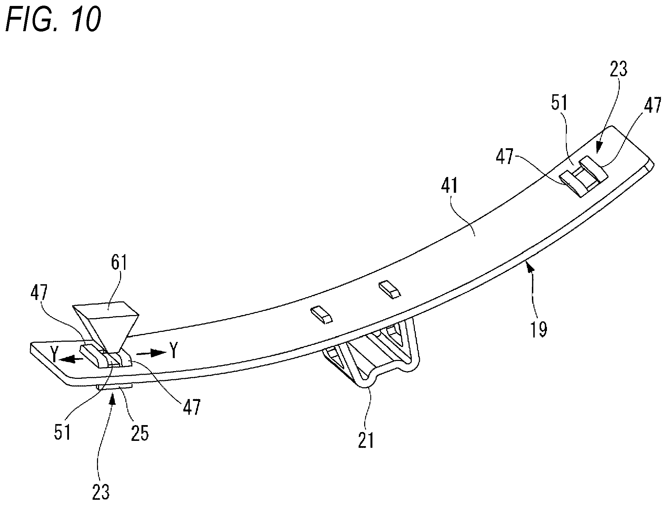

Fig. 10 is a perspective view showing the base plate 19 on which the anti-vibration portions 23 are crimped, as viewed from the lining molded surface side.

Next, the base plate 19 is pressed from the lining molded surface 41 of the base plate 19. The press supports protrusion distal ends of the engagement protrusion portions 25 protruding from the opposite side surface 43 of the lining molded surface 41 and the opposite side surface 43 of the base plate 19, and inserts a wedge-shaped jig 61 into the crimping opening 51. The jig 61 is pushed into the crimping opening 51, so that the pair of connecting portions 47 is pressed and expanded in a separating direction, and the anti-vibration portion 23 is crimped. Side end surfaces 63 of the fixed base portions 27 are fixed to the inner wall surfaces 49 of the through holes 45, so that the crimped anti-vibration portion 23 is fixed to the base plate 19.

A crimping process applied to the anti-vibration portion 23 has an effect of preventing the anti-vibration portion 23 from coming off until simultaneous molding with the lining 39 is performed.

On the base plate 19 to which the anti-vibration portion 23 is fixed, the lining 39, which is a friction member, is molded on the lining molded surface 41. The lining 39 covers the connecting portions 47 of the anti-vibration portion 23 and is fixed to the base plate 19. As shown in Fig. 4, the anti-vibration portion 23 is fixed to the attachment portion 21 by a double fixing structure of crimping and fixing the anti-vibration portion 23 by the fixed base portions 27 and attaching the lining 39. Accordingly, production of the brake shoe 17 in which the anti-vibration portions 23 are attached to the base plate 19 is completed.

Next, functions of the above-described configurations will be described.

In the brake shoe 17 according to the present embodiment, the anti-vibration portions 23 are crimped and fixed to the base plate 19. The anti-vibration portions 23 include the engagement protrusion portions 25 protruding from the opposite side surface 43 of the lining molded surface 41 of the base plate 19. In the brake shoe 17, the engagement protrusion portions 25 protruding from the base plate 19 are loosely fitted in the grooves 35 of the brake shoe head 11 attached to the vehicle side, so that vibration in the width direction Z intersecting the braking force applying direction Y of the base plate 19 is suppressed.

The anti-vibration portions 23 include the fixed base portions 27 on a base end side of the engagement protrusion portions 25 protruding from the opposite side surface 43. In the anti-vibration portion 23, the engagement protrusion portions 25 are inserted into the through holes 45 formed in the base plate 19 from the lining molded surface side. The fixed base portions 27 abut against the lining molded surface 41, so that further insertion of the anti-vibration portions 23 whose the engagement protrusion portions 25 are inserted is suppressed. The fixed base portions 27 abut against the lining molded surface 41 to suppress the engagement protrusion portions 25 from coming out from the opposite side surface 43 opposite to the lining molded surface 41. The fixed base portions 27 abut against the lining molded surface 41, so that the anti-vibration portions 23 are positioned in an insertion direction.

On the other hand, the anti-vibration portions 23 are positioned, and at the same time, the fixed base portions 27 are crimped to the inner wall surfaces 49 of the through holes 45. The fixed base portions 27 are crimped, so that plastically deformed parts of the fixed base portions 27 are fixed to the inner wall surfaces 49 of the through holes 45. The anti-vibration portions 23, in which the fixed base portions 27 are crimped to the through hole 45, are also suppressed from coming off from the lining molded surface side. Therefore, the anti-vibration portions 23 are positioned with respect to the base plate 19 and are retained (fixed) in any of front and rear directions (a thickness direction X of the base plate 19) of the insertion direction.

At this time, the crimping process may be performed by applying a load that plastically deforms the small plate piece-shaped engagement protrusion portions 25 inserted into the relatively small through holes 45. That is, the anti-vibration portions 23 can be fixed with a small-scale press machine and the simple jig 61 without a need for welding or friction material molds as in the related art. Therefore, the base plate 19 and the anti-vibration portions 23 are suppressed from being distorted due to heat and a large load accompanying the fixing.

The lining 39 is molded on the lining molded surface 41 for the anti-vibration portions 23 that are positioned and retained with respect to the base plate 19. In the anti-vibration portion 23, the fixed base portions 27 are covered with the lining 39 by molding the lining 39. As a result, an effect of suppressing the anti-vibration portions 23 from coming out from the lining molded surface side is further enhanced.

In the brake shoe 17, the fixed base portions 27 are expanded and crimped in the braking force applying direction Y of the through holes 45. The fixed base portions 27 are formed in a shape of a small piece substantially the same as the engagement protrusion portions 25. Both ends of the fixed base portions 27 inserted into the through holes 45 in the braking force applying direction Y are the side end surfaces 63 in the width direction Z intersecting the braking force applying direction Y The side end surfaces 63 of the fixed base portions 27 are crimped to the inner wall surfaces 49 of the through holes 45. The side end surfaces 63 of the fixed base portions 27 are fixed to the inner wall surfaces 49 without any gap. Accordingly, the anti-vibration portions 23 transmit stress to the brake shoe head 11 without rattling even by repeated impacts during braking, and a vibration is less likely to occur.

In the brake shoe 17, the pair of engagement protrusion portions 25 arranged in the width direction Z intersecting the braking force applying direction Y are connected by the pair of connecting portions 47 separated in the braking force applying direction Y. That is, the anti-vibration portion 23 is formed by integrally forming the pair of engagement protrusion portions 25 and the pair of connecting portions 47. In the anti-vibration portion 23, when the pair of connecting portions 47 is expanded in the braking force applying direction Y, the fixed base portions 27 are also plastically deformed in the braking force applying direction Y In the fixed base portions 27 expanded in the braking force applying direction Y, the side end surfaces 63 on both sides in the braking force applying direction Y are fixed to the inner wall surfaces 49 of the through holes 45. According to the anti-vibration portion 23, the pair of engagement protrusion portions 25 can be positioned and fixed to the pair of through holes 45 at the same time.

In the brake shoe 17, the anti-vibration portion 23 is formed in a shape of a small strip-shaped piece. Both end portions of the anti-vibration portion 23 in the long side direction L are bent at substantially right angles to the same surface side. The anti-vibration portion 23 has a U shape in which the engagement protrusion portions 25 at both end portions connected by the connecting portions 47 are erected perpendicularly to the connecting portions 47.

The elongated crimping opening 51 is formed between the pair of connecting portions 47. In the crimping opening 51, the arc portions 53 at both ends in the long side direction reach the pair of fixed base portions 27. The pair of engagement protrusion portions 25 of the anti-vibration portion 23 is inserted into the pair of through holes 45 at the same time. The pair of connecting portions 47 of the anti-vibration portion 23 whose engagement protrusion portions 25 are inserted into the through holes 45, abuts against the lining molded surface 41. In this state, the crimping opening 51 is expanded in the direction (that is, the braking force applying direction Y) in which the pair of connecting portions 47 is separated from each other, so that the anti-vibration portion 23 is crimped.

The arc portion 53 of the crimping opening 51 is formed in each fixed base portion 27. The fixed base portion 27 includes a pair of leg portions 65 on both sides in the braking force applying direction Y with the arc portion 53 interposed therebetween. The arc portion 53 is formed in the fixed base portion 27, so that the pair of leg portions 65 is easily plastically deformed. As a result, the fixed base portions 27 are fixed to the inner wall surfaces 49 of the through holes 45 with a higher holding force as compared with a case in which the arc portions 53 are not formed.

In the brake shoe 17, the pair of engagement protrusion portions 25 is inserted into the pair of through holes 45 separated in the width direction Z of the base plate 19. The pair of engagement protrusion portions 25 is bent perpendicularly at both ends of the connecting portion 47. The boundary between each engagement protrusion portion 25 and the connecting portion 47 is the inside corner portion 55 bent at a right angle. In the anti-vibration portions 23, the gaps S are secured between the inside corner portions 55 and the inner wall surfaces 49. The minute R portion due to a bending process is present at the inside corner portion 55. By providing the R portion in the gap S in the anti-vibration portion 23, interference between an edge of the through hole 45 and the R portion can be avoided, and the connecting portions 47 can be brought into close contact with the lining molded surface 41.

Accordingly, in the brake shoe 17, the anti-vibration portion 23 can be fixed to the base plate 19 with high accuracy and without rattling. The pair of engagement protrusion portions 25 is connected by the connecting portions 47, so that the pair of crimped engagement protrusion portions 25 complements each other in fixing strength, and the fixing strength can be increased as compared with one engagement protrusion portion 25.

Next, an anti-vibration portion according to a modification will be described.

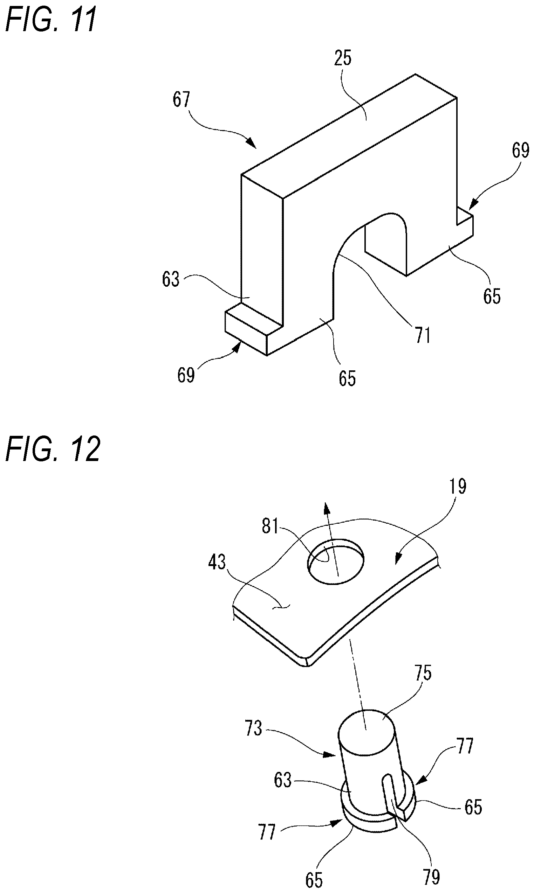

Fig. 11 is a perspective view showing one of four-divided anti-vibration portions 67 according to the modification.

In the anti-vibration portions 67 according to this modification, the pair of engagement protrusion portions 25 provided on the above-described anti-vibration portion 23 is each divided into four engagement protrusion portions 25. Each engagement protrusion portion 25 is formed in a shape of a small piece. The engagement protrusion portion 25 of the anti-vibration portion 67 has the same shape as the above-described engagement protrusion portion 25. On the other hand, the pair of leg portions 65 is formed on fixed base portions 69 of the anti-vibration portion 67 with an arc portion (a crimping opening 71) interposed between the pair of leg portions 65. The leg portions 65 protrude outward from the side end surfaces 63 to suppress the anti-vibration portion 67 from coming out to the opposite side surface 43 opposite to the lining molded surface 41. After the engagement protrusion portions 25 have been inserted into the through holes 45 and have been positioned, the crimping opening 71 of the fixed base portions 69 is crimped and expanded. Accordingly, the leg portions 65 are fixed to the inner wall surfaces 49 of the through holes 45, so that the anti-vibration portion 67 is fixed to the base plate 19.

According to a brake shoe using the anti-vibration portion 67, distortion due to heat and a large load accompanying the fixing of the anti-vibration portion 67 is suppressed. The anti-vibration portion 67 can be easily produced only by performing punching in a pressing process.

Fig. 12 is a perspective view showing one of anti-vibration portions 73 formed in a cylindrical shape according to a modification.

In the anti-vibration portions 73 according to this modification, the pair of engagement protrusion portions 25 each provided on the pair of anti-vibration portions 23 described above, is each divided into four engagement protrusion portions 75. Each engagement protrusion portion 75 is formed in a cylindrical shape. The engagement protrusion portion 75 of the anti-vibration portion 73 is formed in a cylindrical shape. The pair of leg portions 65 is formed on fixed base portions 77 of the anti-vibration portion 73 with a slit-shaped crimping opening 79 cut out in a diameter direction interposed between the pair of leg portions 65. The leg portions 65 protrude outward from the side end surfaces 63 to suppress the anti-vibration portion 73 from coming out to the opposite side surface 43 opposite to the lining molded surface 41. A through hole 81 for inserting the anti-vibration portion 73 is circular. After the engagement protrusion portion 75 has been inserted into the through hole 81 and has been positioned, the crimping opening 79 of the fixed base portions 77 is crimped and expanded. Accordingly, the leg portions 65 are fixed to the inner wall surface 49 of the through hole 81, so that the anti-vibration portion 73 is fixed to the base plate 19.

According to a brake shoe using the anti-vibration portion 73, distortion due to heat and a large load accompanying the fixing of the anti-vibration portion 73 is suppressed. The anti-vibration portion 73 can be easily produced only by cutting a round bar material.

Therefore, according to the brake shoe 17 in the present embodiment, the anti-vibration portion 23 can be fixed to the base plate 19 without causing distortion due to heat or a large load.

### INDUSTRIAL APPLICABILITY

According to the railway brake shoe in the present invention, it is possible to fix the anti-vibration portion to the base plate without causing distortion due to heat or a large load as in a case of performing fixing by performing welding or molding using a friction material mold, and no large-scale equipment is required.

### REFERENCE SIGNS LIST

- 11: brake shoe head
- 15: wheel
- 17: brake shoe (railway brake shoe)
- 19: base plate
- 21: attachment portion
- 23: anti-vibration portion
- 25: engagement protrusion portion
- 27: fixed base portion
- 35: groove
- 39: lining
- 41: lining molded surface
- 43: opposite side surface
- 45: through hole
- 47: connecting portion
- 49: inner wall surface
- 51: crimping opening
- 55: inside corner portion
- S: gap
- Y: braking force applying direction
- Z: width direction

## Claims

1. A railway brake shoe (17) comprising:
a base plate (19) in which a lining (39) is molded on a surface facing a wheel (15);
an attachment portion (21) joined to an opposite side surface (43) opposite to a lining molded surface (41) of the base plate; and
an anti-vibration portion (23) that is loosely fitted in a groove (35) of a brake shoe head (11) and that is attached to the base plate so as to suppress a vibration in the base plate in a width direction (Z) intersecting a braking force applying direction (Y),
wherein the anti-vibration portion includes:
an engagement protrusion portion (25) that is inserted into a through hole (45) formed in the base plate from a side of the lining molded surface and that has a distal end protruding from the opposite side surface,
**characterized in that** the anti-vibration portion further includes:
a fixed base portion (27) that abuts against the lining molded surface to be positioned in an insertion direction, and that is crimped to an inner wall surface (49) of the through hole.

2. The railway brake shoe (17) according to claim 1,
wherein the fixed base portion (27) is expanded and crimped with respect to the through hole (45) in the braking force applying direction (Y) of the base plate (19).

3. The railway brake shoe (17) according to claim 1 or 2,
wherein the anti-vibration portion (23) includes:
a pair of the engagement protrusion portions (25);
a pair of the fixed base portions (27);
a connecting portion (47) configured to connect between the fixed base portions (27) in the pair of engagement protrusion portions; and
a crimping opening (51) extending along a connecting direction of the connecting portion, and
wherein the fixed base portion (27) is crimped by expanding the connecting portion in the braking force applying direction (Y) of the base plate (19).

4. The railway brake shoe (17) according to claim 3,
wherein, in the anti-vibration portion (23), the elongated crimping opening (51) is formed, both end portions in a long side direction are formed of a steel plate bent at a right angle, and the both end portions in the long side direction constitute the pair of engagement protrusion portions (25).

5. The railway brake shoe (17) according to claim 4,
wherein a pair of the through holes (45) is formed in the base plate (19), and
wherein the pair of engagement protrusion portions (25) has gaps (S) between the inner wall surfaces (49) of the through holes (45) and bent inside corner portions (55) of the engagement protrusion portions (25).

## Patentansprüche

1. Eisenbahnbremsbacke (17) mit
eine Grundplatte (19), bei der ein Belag (39) auf einer einem Rad (15) zugewandten Oberfläche angeformt ist;
einen Befestigungsabschnitt (21), der mit einer gegenüberliegenden Seitenfläche (43) verbunden ist, die einer mit dem Belag geformten Fläche (41) der Grundplatte gegenüberliegt; und
einen Antivibrationsabschnitt (23), der lose in eine Nut (35) eines Bremsbackenkopfes (11) eingepasst ist und der an der Grundplatte befestigt ist, um eine Vibration in der Grundplatte in einer Breitenrichtung (Z) zu unterdrücken, die eine Bremskraftaufbringungsrichtung (Y) schneidet,
wobei der Antivibrationsabschnitt Folgendes umfasst:
einen Eingriffsvorsprungsabschnitt (25), der in ein Durchgangsloch (45) eingesetzt ist, das in der Grundplatte von einer Seite der mit dem Belag geformten Fläche geformt ist, und der ein distales Ende aufweist, das von der gegenüberliegenden Seitenfläche vorsteht; und
**dadurch gekennzeichnet, dass** der Antivibrationsabschnitt ferner Folgendes umfasst:
einen festen Basisabschnitt (27), der an der mit dem Belag geformten Fläche anliegt, um in einer Einsetzrichtung positioniert zu werden, und der an eine Innenwandfläche (49) des Durchgangslochs gecrimpt ist.

2. Eisenbahnbremsbacke (17) nach Anspruch 1,
wobei der feste Basisabschnitt (27) in Bezug auf das Durchgangsloch (45) in der Bremskraftaufbringungsrichtung (Y) der Basisplatte (19) aufgeweitet und gecrimpt ist.

3. Eisenbahnbremsbacke (17) nach Anspruch 1 oder 2,
wobei der Antivibrationsabschnitt (23) umfasst
ein Paar der Eingriffsvorsprungsabschnitte (25);
ein Paar der festen Basisabschnitte (27);
einen Verbindungsabschnitt (47), der so konfiguriert ist, dass er eine Verbindung zwischen den festen Basisabschnitten (27) in dem Paar von Eingriffsvorsprungsabschnitten herstellt; und
eine Crimpöffnung (51), die sich entlang einer Verbindungsrichtung des Verbindungsabschnitts erstreckt, und
wobei der feste Basisabschnitt (27) durch Aufweiten des Verbindungsabschnitts in der Bremskraftaufbringungsrichtung (Y) der Basisplatte (19) gecrimpt ist.

4. Eisenbahnbremsbacke (17) nach Anspruch 3,
wobei in dem Antivibrationsabschnitt (23) die längliche Crimpöffnung (51) ausgebildet ist, beide Endabschnitte in einer Längsseitenrichtung aus einer rechtwinklig gebogenen Stahlplatte gebildet sind und die beiden Endabschnitte in der Längsseitenrichtung das Paar von Eingriffsvorsprungsabschnitten (25) bilden.

5. Eisenbahnbremsbacke (17) nach Anspruch 4,
wobei ein Paar der Durchgangslöcher (45) in der Grundplatte (19) ausgebildet ist, und
wobei das Paar von Eingriffsvorsprungsabschnitten (25) Lücken (S) zwischen den Innenwandflächen (49) der Durchgangslöcher (45) und gebogenen inneren Eckabschnitten (55) der Eingriffsvorsprungsabschnitte (25) aufweist.

## Revendications

1. Sabot de frein ferroviaire (17) comprenant :
une plaque de base (19) dans laquelle un revêtement (39) est moulé sur une surface faisant face à une roue (15) ;
une partie de fixation (21) reliée à une surface latérale (43) opposée à une surface moulée de revêtement (41) de la plaque de base ; et
une partie anti-vibration (23) qui est fixée de manière lâche dans une rainure (35) d'une tête de sabot de frein (11) et qui est attachée à la plaque de base de manière à supprimer une vibration dans la plaque de base dans une direction de largeur (Z) croisant une direction d'application de la force de freinage (Y),
dans lequel la partie anti-vibration inclut :
une partie saillante d'engagement (25) qui est insérée dans un trou traversant (45) formé dans la plaque de base à partir d'un côté de la surface moulée de revêtement et qui a une extrémité distale faisant saillie à partir de la surface latérale opposée,
**caractérisée en ce que** la partie anti-vibration inclut en outre :
une partie de base fixe (27) qui vient en butée contre la surface moulée du revêtement pour être positionnée dans une direction d'insertion, et qui est sertie sur une surface de paroi intérieure (49) du trou traversant.

2. Sabot de frein ferroviaire (17) selon la revendication 1,
dans lequel la partie de base fixe (27) est dilatée et sertie par rapport au trou traversant (45) dans la direction d'application de la force de freinage (Y) de la plaque de base (19).

3. Sabot de frein ferroviaire (17) selon la revendication 1 ou 2,
dans lequel la partie anti-vibration (23) inclut :
une paire de parties saillantes d'engagement (25) ;
une paire de parties de base fixes (27) ;
une partie de connexion (47) configurée pour se connecter entre les parties de base fixes (27) dans la paire de parties saillantes d'engagement ; et
une ouverture de sertissage (51) s'étendant le long d'une direction de connexion de la partie de connexion, et
dans lequel la partie de base fixe (27) est sertie par l'expansion de la partie de connexion dans la direction d'application de la force de freinage (Y) de la plaque de base (19).

4. Sabot de frein ferroviaire (17) selon la revendication 3,
dans lequel, dans la partie anti-vibration (23), l'ouverture de sertissage (51) allongée est formée, les deux parties d'extrémité dans une direction latérale longue sont formées d'une plaque d'acier pliée à un angle droit, et les deux parties d'extrémité dans la direction latérale longue constituent la paire de parties saillantes d'engagement (25).

5. Sabot de frein ferroviaire (17) selon la revendication 4,
dans lequel une paire de trous traversants (45) est formée dans la plaque de base (19), et
dans lequel la paire de parties saillantes d'engagement (25) présente des espaces (S) entre les surfaces de paroi intérieure (49) des trous traversants (45) et les parties d'angle intérieur (55) repliées des parties saillantes d'engagement (25).
